# EUROPÄISCHE PATENTANMELDUNG

(11) **EP 3 421 740 A1**
(43) Veröffentlichungstag der Anmeldung: **02.01.2019**
(21) Anmeldenummer: 18170485.9
(22) Anmeldetag: 03.05.2018
(51) Int. Cl.: F01L 3/02, F01L 3/00

(54) **VENTILSITZRING EINES GASWECHSELVENTILS ALS EINSTÜCKIGER GUSSKÖRPER AUS EINER COBALT CHROM HARTLEGIERUNG**

(30) Priorität: 28.06.2017 DE 102017114375
(71) Anmelder: MAN Diesel & Turbo SE, 86153 Augsburg (DE)
(72) Erfinder: Eschey, Christian, 86500 Kutzenhausen (DE); Maurer, Helmuth, 86167 Augsburg (DE)

(57) **Zusammenfassung**

Die Erfindung betrifft einen Ventilsitzring (10) eines Gaswechselventils einer Brennkraftmaschine, insbesondere eines Dieselmotors oder Gasmotors, mit einem eine Durchströmungsöffnung (12) definierenden Grundkörper (11), wobei an einem Abschnitt des Grundkörpers (11) im Bereich der Durchströmungsöffnung (12) ein Ventilsitz (14) für einen Ventilkörper des Gaswechselventils angeordnet ist.

Die Erfindung sieht vor, dass wenigstens der Grundkörper (11) und der Ventilsitz (14) zusammen als einstückiger Gußformling aus einer Cobalt-Chrom-Hartlegierung hergestellt sind.

## Beschreibung

Die Erfindung betrifft einen Ventilsitzring eines Gaswechselventils einer Brennkraftmaschine, insbesondere eines Dieselmotors oder Gasmotors, mit einem eine Durchströmungsöffnung definierenden Grundkörper, wobei an einem Abschnitt des Grundkörpers im Bereich der Durchströmungsöffnung ein Ventilsitz für einen Ventilkörper des Gaswechselventils angeordnet ist, gemäß dem Oberbegriff von Anspruch 1.

Die Erfindung betrifft auch ein Gaswechselventil mit einem solchen Ventilsitzring gemäß Anspruch 9 sowie eine Brennkraftmaschine mit wenigstens einem solchen Gaswechselventil gemäß Anspruch 10.

Aus DE 10 2011 007 140 A1 ist ein gattungsgemäßer Ventilsitzring eines Gaswechselventils einer Brennkraftmaschine bekannt. Der aus diesem Stand der Technik bekannte Ventilsitzring verfügt über einen Grundkörper, der eine Durchströmungsöffnung des Ventilsitzrings definiert, wobei an einem Abschnitt des Grundkörpers im Bereich der Durchströmungsöffnung ein Ventilsitz für einen Ventilkörper des Gaswechselventils ausgebildet ist. Dann, wenn ein Gaswechselventil mit einem solchen Ventilsitzring geschlossen ist, liegt der Ventilkörper des Gaswechselventils an dem vom Grundkörper bereitgestellten Ventilsitz an. Dann, wenn ein solches Gaswechselventil geöffnet ist, ist der Ventilkörper vom Ventilsitz des Grundkörpers abgehoben. Aus DE 10 2011 007 140 A1 ist weiterhin bekannt, den Ventilsitz aus einem Hartmetall und den Grundkörper aus einem Stahl zu fertigen. Das Hartmetall des Ventilsitzes, also die sog. Panzerung hat eine Kobalt- oder Nickel-Basis. Beim Stahl des Grundkörpers handelt es sich um Ventilstahl nach DIN EN10090 oder auch um Einsatz- oder Vergütungsstahl. Das Hartmetall des Ventilsitzes wird auf den Stahl des Grundkörpers aufgebracht, wobei aufgrund des dabei entstehenden Wärmeeinflusses ein Übergangsbereich zwischen den beiden Materialien entsteht.

Dieser Übergangsbereich kann jedoch nicht als Begrenzung für einen eventuell im oder am Ventilsitzring anzuordnenden Kühlmittelkanal verwendet werden, so dass die Möglichkeiten für die Lage eines solchen Kühlmittelkanals bei einer solchen Ausführung beschränkt sind. Außerdem ist auch der Wärmeübergang im Übergangsbereich zwischen den beiden Materialien beschränkt.

Der vorliegenden Erfindung liegt demgegenüber die Aufgabe zugrunde, einen Ventilsitzring der oben beschriebenen Art derart weiter zu entwickeln, dass er verbesserte Wärmeeigenschaften bei gleichzeitig hoher Festigkeit und Steifigkeit aufweist. Weiterhin soll auch ein Gaswechselventil und eine Brennkraftmaschine mit wenigstens einem solchen Ventilsitzring zur Verfügung gestellt werden.

Diese Aufgabe wird durch die Merkmale von der Ansprüche 1, 9 und 10 gelöst.

### Offenbarung der Erfindung

Die Erfindung geht aus von einem Ventilsitzring eines Gaswechselventils einer Brennkraftmaschine, insbesondere eines Dieselmotors oder Gasmotors, mit einem eine Durchströmungsöffnung definierenden oder in Umfangsrichtung umschließenden Grundkörper, wobei an einem Abschnitt des Grundkörpers im Bereich der Durchströmungsöffnung ein Ventilsitz für einen Ventilkörper des Gaswechselventils ausgebildet ist, insbesondere für einen Ventilteller.

Unter dem Grundkörper des Ventilsitzrings ist der Abschnitt oder Teil des Ventilsitzrings zu verstehen, mit welchem dieser in oder an einem Körper wie einem Zylinderkopf einer Brennkraftmaschine gehalten wird und welcher den Ventilsitz trägt bzw. an welchem dieser ausgebildet ist.

Der Ventilsitz ist an dem Grundkörper etwa an einer radial inneren Kante eines ersten axialen Endes des Grundkörpers angeordnet und weist beispielsweise eine etwa plane schräg ausgerichtete Außenfläche auf, welche sich etwa von einer axialen Stirnfläche am ersten Ende des Grundkörpers bis zu der radial inneren Umfangsfläche des Grundkörpers erstreckt, welche eine Durchströmungsöffnung des Ventilsitzrings definiert.

Der Ventilsitz bildet den Abschnitt oder Teil des Ventilsitzrings aus, gegen welchen ein Ventilkörper des Gaswechselventils dichtend anliegt oder von diesem abgehoben ist, insbesondere der Ventilteller. Dann, wenn das Gaswechselventil mit einem solchen Ventilsitzring geschlossen ist, liegt der Ventilteller des Gaswechselventils an dem am Grundkörper angeordneten Ventilsitz an. Wenn aber das Gaswechselventil mit einem solchen Ventilsitzring geöffnet ist, ist der Ventilteller des Gaswechselventils von dem am Grundkörper angeordneten Ventilsitz abgehoben und gibt einen Strömungsquerschnitt frei.

Erfindungsgemäß sind wenigstens der Grundkörper und der Ventilsitz zusammen als einstückiger Gußformling aus einer Cobalt-Chrom-Hartlegierung hergestellt. Gußformling bedeutet, dass wenigstens der Grundkörper und der Ventilsitz zusammen in einem einzigen Arbeitsschritt bzw. Gießprozess aus der Cobalt-Chrom-Hartlegierung so als einstückiges Rohteil hergestellt sind, dass lediglich noch eine nachfolgende Oberflächenbearbeitung notwendig ist.

Solche Cobalt-Chrom-Hartlegierungen werden auch als Stellite® bezeichnet. Stellite® enthält Anteile von Chrom (Cr), Wolfram (Wo), Nickel (Ni), Molybdän (Mo) und Kohlenstoff (C), der durch die Bildung von Karbiden einen großen Einfluss auf die Eigenschaften der Legierung hat. Das Hauptmerkmal von Stellite® ist eine hohe Beständigkeit gegen Verschleiß wie beispielsweise Korrosion oder Abrasion, die auch bei hohen Temperaturen erhalten bleibt. Deshalb eignet sich dieser Werkstoff für temperaturbelastete Gaswechselventile von Brennkraftmaschinen besonders.

Weil erfindungsgemäß wenigstens der Grundkörper und der Ventilsitz zusammen als einstückiger Gußformling aus der Cobalt-Chrom-Hartlegierung hergestellt sind, entfällt der beim Stand der Technik vorhandene Material-Übergangsbereich zwischen zwei unterschiedlichen Materialien von Grundkörper und Ventilsitz. Dadurch wird die Flexibilität hinsichtlich der Lage von Kühlmittelkanälen erhöht, weil dann auch in oder an dem geometrischen Übergang zwischen Grundkörper und Ventilsitzring oder auch im Bereich des Ventilsitzes, insbesondere nahe der zum Ventilkörper des Gaswechselventils weisenden Oberfläche des Ventilsitzes wenigstens ein Kühlmittelkanal ausgebildet werden kann, wo die Temperaturbelastung besonders hoch ist.

Wenigstens ein in dem Ventilsitzring wenigstens teilweise integrierter Kühlmittelkanal kann dann auch in einem Arbeitsschritt bei dem Gießprozess des Ventilsitzrings gefertigt bzw. gegossen werden. Wegen des Urformens des Ventilsitzrings in einem einzigen Arbeitsschritt ist dieser auch kostengünstig herstellbar.

Weiterhin wird auch wegen eines gegenüber dem Stand der Technik fehlenden Übergangsbereichs von unterschiedlichen Materialien von Grundkörper und Ventilsitz die Wärmeleitfähigkeit des Ventilsitzrings erhöht, was sich positiv auf dessen Temperaturbeständigkeit z.B. gegenüber hohen Abgastemperaturen auswirkt, weil dann Wärme von hoch temperaturbelasteten Zonen des Ventilsitzrings leichter in geringer temperaturbelastete Zonen geleitet werden kann.

Durch die in den Unteransprüchen aufgeführten Maßnahmen sind vorteilhafte Weiterbildungen und Verbesserungen des ersten Aspekts der Erfindung möglich.

Gemäß einer bevorzugten Ausführungsform ist der Ventilsitzring insgesamt als einstückiger Gußformling aus einer Cobalt-Chrom-Hartlegierung hergestellt, d.h. jeglicher Abschnitt des Ventilsitzrings besteht aus der Cobalt-Chrom-Hartlegierung und es sind keine weiteren Einzelteile vorhanden.

Die Cobalt-Chrom-Hartlegierung weist bevorzugt die folgende Legierungszusammensetzung in Massenprozent (Massen %) auf:

| Co | Cr | W | C | Ni | Mo | Fe | Si | andere |
|---|---|---|---|---|---|---|---|---|
| 47,3-54,6 | 27-32 | 7,5-9,5 | 1,4 - 1,7 | < 3 | < 1 | < 3 | < 2 | < 0,5 |

wobei die Abkürzung Co für Kobalt, Cr für Chrom, C für Kohlenstoff, Ni für Nickel, Mo für Molybdän, Fe für Eisen und Si für Silizium steht. Unter "andere" Legierungsbestandteile sind weitere Legierungsbestandteile zu verstehen, welche wegen ihres geringen Massenanteils hier nicht weiter spezifiziert werden sollen. Stellite® mit einer solchen Zusammensetzung werden auch als Stellite 12 ® bezeichnet.

Die Cobalt-Chrom-Hartlegierung weist bevorzugt eine Härte von 46 bis 51 HRC und eine Dichte von ungefähr 8,53 g/cm³ auf.

Wie oben bereits ausgeführt weist der Ventilsitzring bevorzugt wenigstens einen in Umfangsrichtung des Ventilsitzrings bzw. des Grundkörpers umlaufenden Kühlmittelkanal auf, welcher im Querschnitt gesehen zumindest teilweise von einer inneren Mantelfläche des Ventilsitzrings begrenzt ist. Kühlmittel, welches zur Kühlung des Ventilsitzrings den wenigstens einen Kühlmittelkanal durchströmt, kann dem Kühlmittelkanal über eine Zuleitung bzw. einen Zulauf zugeführt und von demselben über eine Ableitung bzw. einen Ablauf abgeführt werden.

Dabei kann der wenigstens eine Kühlmittelkanal derart in oder an dem Ventilsitzring ausgebildet sein, dass der Kühlmittelkanal im Querschnitt gesehen auch von einem vom Ventilsitzring abweichenden Körper begrenzt ist, insbesondere von einer Wandung einer Ausnehmung im Zylinderkopf einer Brennkraftmaschine. Dann ist der wenigstens eine Kühlmittelkanal teilweise in dem Ventilsitzring integriert.

Alternativ kann der wenigstens eine Kühlmittelkanal derart in oder an dem Ventilsitzring ausgebildet sein, dass der Kühlmittelkanal im Querschnitt gesehen ausschließlich von einer inneren Mantelfläche des Ventilsitzrings begrenzt wird. Dann ist der wenigstens eine Kühlmittelkanal vollständig in dem Ventilsitzring ausgebildet bzw. integriert.

Die Erfindung betrifft auch ein Gaswechselventil, welches wenigstens einen oben beschriebenen Ventilsitzring aufweist und auch eine Brennkraftmaschine mit wenigstens einem solchen Gaswechselventil.

Bei der Brennkraftmaschine kann es sich zum Beispiel um einen Dieselmotor, insbesondere um einen mit Schweröl betriebenen Großdieselmotor, oder um einen Gasmotor handeln. Im Bereich einer solchen Brennkraftmaschine, die bevorzugt mehrere Zylinder aufweist, ist an jedem Zylinder mindestens ein Gaswechselventil vorgesehen, nämlich einerseits Einlassventile für Ladeluft bzw. ein Ladeluft-Brennstoff-Gemisch und/oder Auslassventile für Abgas. Der erfindungsgemäße Ventilsitzring kann dann sowohl im Bereich der Einlassventile als auch im Bereich der Auslassventile der Brennkraftmaschine angeordnet sein.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: einen Querschnitt durch eine bevorzugte Ausführungsform eines Ventilsitzrings gemäß der Erfindung;
- Fig.2: einen weiteren Querschnitt durch eine bevorzugte Ausführungsform eines Ventilsitzrings gemäß der Erfindung.
- Fig.3: Ventilsitzring in Draufsicht mit den Querschnitten A und B

### Beschreibung der Ausführungsbeispiele

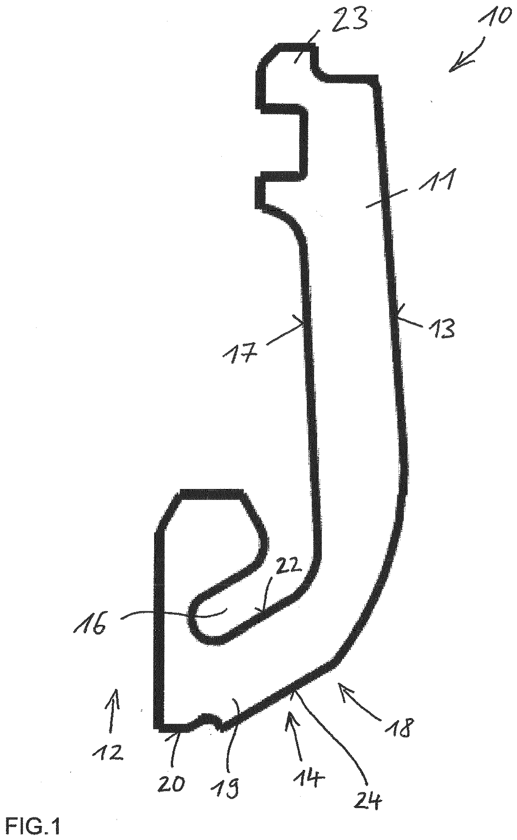

**Fig.1** zeigt einen Querschnitt A durch eine bevorzugte Ausführungsform eines Ventilsitzrings 10 eines ansonsten hier nicht dargestellten Gaswechselventils in axialer Schnittrichtung A, welcher in einer Ausnehmung eines hier ebenfalls nicht gezeigten Zylinderkopfs einer Brennkraftmaschine, hier beispielsweise einer selbstzündenden Brennkraftmaschine eingesetzt ist.

Der generell zylindrische, hülsenförmige und in Umfangsrichtung umlaufende Ventilsitzring 10 weist einen zylindrisch umlaufenden hülsen- oder ringförmigen Grundkörper 11 auf, der in seinem Inneren eine Durchströmungsöffnung 12 des Ventilsitzrings 10 definiert. Die Durchströmungsrichtung 12 wird genauer von einer radial inneren Umfangsfläche 13 des Grundkörpers 11 definiert. Weiterhin ist der Ventilsitzring 10 mit seiner radial äußeren Umfangsfläche 17 in der Ausnehmung des Zylinderkopfs aufgenommen. An einem ersten axialen Ende 19 des Grundkörpers 11 im Bereich der Durchströmungsöffnung 12 ist ein Ventilsitz 14 des Ventilsitzrings 10 ausgebildet, wobei an diesem Ventilsitz 14 bei einem geschlossenen Gaswechselventil ein nicht gezeigter Ventilkörper des Gaswechselventils zur Anlage kommt, insbesondere ein Ventilteller. Der Ventilsitz 14 ist beispielsweise an einer radial inneren Kante 18 des ersten axialen Endes 19 des Grundkörpers 11 angeordnet bzw. ausgebildet und weist beispielsweise eine im Querschnitt gesehen schräg ausgerichtete und im Wesentlichen plane Außenfläche 24 auf, welche sich etwa von einer axialen Stirnfläche 20 des ersten axialen Endes 19 des Grundkörpers 11 bzw. des Ventilsitzrings 10 bis zur radial inneren Umfangsfläche 13 erstreckt. Das zweite axiale Ende 23 des Grundkörpers 11 bzw. des Ventilsitzrings 10 weist von dem Ventilsitz 14 weg.

In den Grundkörper 11 des Ventilsitzrings 10 ist beispielsweise hier nur ein in Umfangsrichtung des Grundkörpers 11 gesehen umlaufender Kühlkanal 16 eingebracht. Kühlmittel, welches zur Kühlung des Ventilsitzrings 10 und insbesondere des Ventilsitzes 14 den Kühlkanal 16 durchströmt, kann dem Kühlkanal 16 über eine hier nicht gezeigte Zuleitung bzw. einen Zulauf zugeführt und von demselben über eine hier nicht gezeigte Ableitung bzw. einen Ablauf abgeführt werden. Der Kühlmittelkanal 16 ist hier bevorzugt im Bereich eines Übergangs vom Ventilsitz 14 zum Grundkörper 11 angeordnet, beispielsweise nahe in Bezug zur Außenfläche 24 des Ventilsitzes 14, welche zu dem Ventilteller des Gaswechselventils weist und welche komplementär zum Querschnittsverlauf des Ventiltellers ausgebildet ist. Dabei ist zwischen dem Kühlmittelkanal 16 und dieser Außenfläche 24 hier beispielsweise eine eher geringe, für Steifigkeit und Festigkeit aber notwendige Wandstärke des Ventilsitzes 14 vorhanden.

Kühlmittel, welches zur Kühlung des Ventilsitzrings 10 den Kühlmittelkanal 16 durchströmt, kann dem Kühlmittelkanal 16 über eine hier nicht gezeigten Zuleitung bzw. einen Zulauf zugeführt und von demselben über eine hier nicht gezeigte Ableitung bzw. einen Ablauf abgeführt werden.

Der in Umfangsrichtung des Grundkörpers 11 gesehen umlaufende Kühlmittelkanal 16 wird bei der Ausführungsform von **Fig.1** im Querschnitt gesehen nur teilweise von einer inneren Mantelfläche 22 des Ventilsitzrings 10 begrenzt. Der im Querschnitt gesehen restliche Teil des Kühlmittelkanals 16 ist dann von einem vom Ventilsitzring 10 abweichenden Körper begrenzt, insbesondere (auch) von einer Wandung der Ausnehmung des hier nicht gezeigten Zylinderkopfs der Brennkraftmaschine, in welche der Ventilsitzring 10 eingesetzt ist.

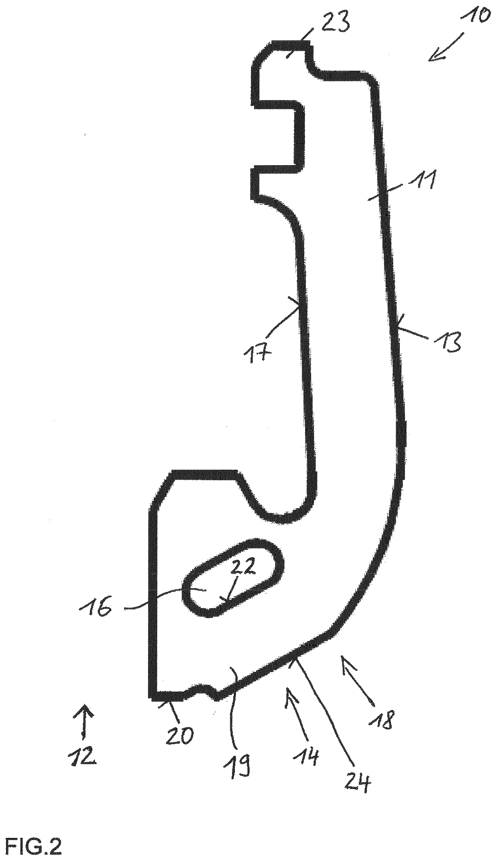

**Fig.2** zeigt einen Querschnitt B an einer anderen Stelle des Ventilsitzrings aus Fig. 1; der Kühlmittelkanal 16 im Querschnitt gesehen auch ausschließlich von einer inneren Mantelfläche 22 des Ventilsitzrings 10 begrenzt werden und ist dann vollständig im Ventilsitzring 10 integriert oder ausgebildet. Was die Nachbarschaft des Kühlmittelkanals 16 zu der Außenfläche des Ventilsitzes 14 betrifft, welche zu dem Ventilteller des Gaswechselventils weist, so gilt hier dasselbe wie zur Ausführungsform von **Fig.1****.**

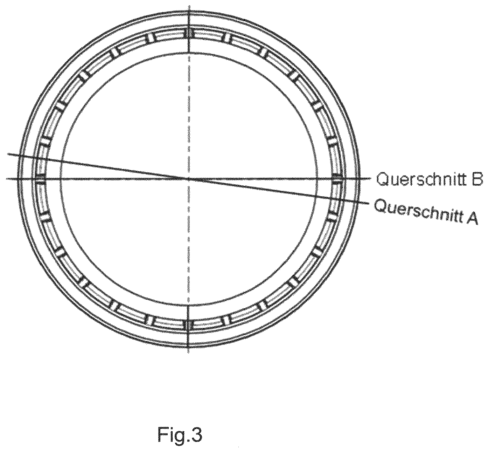

**Fig. 3** verdeutlicht die Schnittebenen bzw. Querschnitte A und B, die entsprechend in den Ansichten aus Fig. 1 und 2 wiedergegeben sind.

Es versteht sich, dass anstatt nur eines Kühlmittelkanals 16 auch mehrere Kühlmittelkanäle in dem Ventilsitzring 10 wenigstens teilweise ausgebildet sein können.

### Bezugszeichenliste

- 10: Ventilsitzring
- 11: Grundkörper
- 12: Durchströmungsöffnung
- 13: radial innere Umfangsfläche
- 14: Ventilsitz
- 16: Kühlmittelkanal
- 17: radial äußere Umfangsfläche
- 18: radial innere Kante
- 19: erstes axiales Ende
- 20: axiale Stirnfläche
- 22: innere Mantelfläche
- 23: zweites axiales Ende
- 24: Außenfläche

## Patentansprüche

1. Ventilsitzring (10) eines Gaswechselventils einer Brennkraftmaschine, insbesondere eines Dieselmotors oder Gasmotors, mit einem eine Durchströmungsöffnung (12) definierenden Grundkörper (11), wobei an einem Abschnitt des Grundkörpers (11) im Bereich der Durchströmungsöffnung (12) ein Ventilsitz (14) für einen Ventilkörper des Gaswechselventils angeordnet ist, **dadurch gekennzeichnet, dass** wenigstens der Grundkörper (11) und der Ventilsitz (14) zusammen als einstückiger Gußformling aus einer Cobalt-Chrom-Hartlegierung hergestellt sind.

2. Ventilsitzring nach Anspruch 1, **dadurch gekennzeichnet, dass** der Ventilsitzring insgesamt als einstückiger Gußformling aus einer Cobalt-Chrom-Hartlegierung hergestellt ist.

3. Ventilsitzring nach Anspruch 1 oder 2, **dadurch gekennzeichnet, dass** die Cobalt-Chrom-Hartlegierung die folgende Legierungszusammensetzung in Massenprozent aufweist:
| Co | Cr | W | C | Ni | Mo | Fe | Si | Andere |
|---|---|---|---|---|---|---|---|---|
| 47,3-54,6 | 27-32 | 7,5-9,5 | 1,4 - 1,7 | < 3 | < 1 | < 3 | < 2 | < 0,5 |

4. Ventilsitzring nach Anspruch 1 oder 2, **dadurch gekennzeichnet, dass** die Cobalt-Chrom-Hartlegierung eine Härte von 46 bis 51 HRC aufweist.

5. Ventilsitzring nach einem der vorhergehenden Ansprüche, **dadurch gekennzeichnet, dass** die Cobalt-Chrom-Hartlegierung eine Dichte von 8,53 g/cm³ aufweist.

6. Ventilsitzring nach einem der vorhergehenden Ansprüche, **dadurch gekennzeichnet, dass** er wenigstens einen in Umfangsrichtung des Grundkörpers (11) umlaufenden Kühlmittelkanal (16) aufweist, welcher im Querschnitt gesehen zumindest teilweise von einer inneren Mantelfläche (22) des Ventilsitzrings (10) begrenzt ist.

7. Ventilsitzring nach Anspruch 6, **dadurch gekennzeichnet, dass** der wenigstens eine Kühlmittelkanal (16) derart in oder an dem Ventilsitzring (10) ausgebildet ist, dass der Kühlmittelkanal (16) im Querschnitt gesehen auch von einem vom Ventilsitzring (16) abweichenden Körper begrenzt ist.

8. Ventilsitzring nach Anspruch 6, **dadurch gekennzeichnet, dass** der wenigstens eine Kühlmittelkanal (16) derart in dem Ventilsitzring (16) ausgebildet ist, dass der Kühlmittelkanal (16) im Querschnitt gesehen ausschließlich von einer inneren Mantelfläche (22) des Ventilsitzrings (10) begrenzt wird.

9. Gaswechselventil einer Brennkraftmaschine mit wenigstens einem Ventilsitzring nach wenigstens einem der vorhergehenden Ansprüche.

10. Brennkraftmaschine mit wenigstens einem Gaswechselventil nach Anspruch 9.
